# EUROPÄISCHE PATENTANMELDUNG

(11) **EP 1 382 625 A1**
(43) Veröffentlichungstag der Anmeldung: **21.01.2004**
(21) Anmeldenummer: 02015771.5
(22) Anmeldetag: 15.07.2002
(51) Int. Cl.: C08G 18/10, C09D 175/04, C08J 7/04

(54) **Primer mit langer Offenzeit für polymere Untergründe**

(71) Anmelder: Sika Technology AG, 6340 Baar (CH)
(72) Erfinder: Trabesinger, Gerald, Dr., 8722 Kaltbrunn (CH); Wirz, Thomas, 8048 Zürich (CH); Venetz, Fabian, 5706 Boniswil (CH)
(74) Vertreter: Isler, Jörg

(57) **Zusammenfassung**

Die vorliegende Erfindung betrifft eine Primerzusammensetzung enthaltend mindestens ein Polyurethanprepolymer **A** mit Isocyanatendgruppen, mindestens ein aliphatische Polyisocyanat **B**, mindestens ein aromatisches Polyisocyanat **C** sowie mindestens ein Reaktionsprodukt **D,** welches erhältlich aus mindestens einem Epoxysilan und mindestens einem Aminosilan oder aus mindestens einem Epoxysilan und mindestens einem Mercaptosilan ist.

Weiterhin sind beansprucht die Verwendung der Primerzusammensetzung als Primer für Klebstoffe, Dichtstoffe und Bodenbeläge.

## Beschreibung

### Technisches Gebiet und Stand der Technik

Die Erfindung betrifft Primer mit langen Offenzeiten sowie einer guten Haftung für problematische polymere Untergründe.

Klebstoffe, Beschichtungen, Dichtstoffe, Bodenbelägen und andere Systeme basieren auf reaktiven Bindemitteln. Die Haftung dieser reaktiven Systeme auf diversen Untergründen ist vielfach mangelhaft. Deshalb werden in der Technik vielfach sogenannte ,Primer' eingesetzt. Ein Primer bildet eine Haftbrücke zwischen dem Untergrund und dem eingesetzten Binder. Ein Primer ist ebenfalls ein chemisch reaktives System und wird auf den Untergrund appliziert. Um einen Haftungsaufbau des Primers mit dem Untergrund zu erhalten, muss der Primer eine gewisse Zeit, der sogenannten ,Ablüftezeit', zur Verfügung stehen, um einen Film zu bilden und zumindest teilweise zu vernetzen, bevor der Klebstoff oder ein anderes reaktives System appliziert werden kann. Die Applikation dieses Systems jedoch ist beschränkt, während der sogenannten ,Offenzeit', in welcher der die Haftung zum Primer noch gewährleistet ist. Beim Überschreiten der Offenzeit ist eine Haftung auf dem Primer nicht mehr gewährleistet. Die Offenzeit wird somit in Versuchen ermittelt, bei denen unterschiedlich lange Zeit zwischen Auftrag des Primers und des Klebstoffs eingehalten werden und die Haftung der Verklebungen nach Aushärten des Klebstoffs ermittelt wird. Modellhaft wird die Haftung zwischen Primer und Klebstoff oder einem anderen reaktiven System durch eine Reaktion zwischen diesen Materialien aufgebaut. Um eine schnelle und kosteneffiziente Verarbeitung zu gewährleisteten, muss in einer technischen, industriellen Anwendung die Ablüftezeit möglichst kurz sein. Das heisst, der Haftungsaufbau des Primers mit dem Untergrund muss möglichst schnell erfolgen, so dass eine Applikation eines Klebstoff oder eines anderen reaktiven Systems möglichst schnell erfolgen kann. Hierbei tritt jedoch das Problem auf, dass der Fertigungsprozess aufgrund von beispielsweise technischer Störungen, Schichtende oder Wochenende unterbrochen wird, so dass zwischen Primerauftrag und Auftrag des Klebstoffs oder anderen reaktiven Systems eine längerer Zeit von einigen Stunden bis Tage oder gar Wochen verstreichen kann. Dies ist besonders störend in kontinuierlich ablaufenden industriellen Anwendungen. Weiterhin besteht im Automobilbau der Trend zur Verlagerung der Vorbehandlung weg von der industriellen Fertigungslinie hin ins Werk des Zulieferers, so dass zwischen dem Primerauftrag im Werk des Zulieferers bis zum Auftrag des Klebstoffs im Fertigungswerk eine Offenzeit von bis zu einigen Wochen verstreichen könnte.

Um auch in diesen Fällen eine gute Haftung zu gewährleisten, besteht ein grosses Bedürfnis nach Primern mit langen Offenzeiten.

Weiterhin sind Kunststoffe immer mehr als Untergründe anzutreffen. Kunststoffe kommen vor allem wegen ihrer Leichtigkeit und der fehlenden Korrosion zum Einsatz. Kunststoffe sind allerdings in Bezug auf Haftung von beispielsweise Klebstoffen vielfach problematisch. Speziell für 1-komponentige Polyurethanklebstoffe hat sich dies bei den Werkstoffen aus ABS (Acrylnitril/Butadien/Styrol), EP-GFK (Epoxy-Glasfaserverstärkte Kunststoffe), Polyester-GFK (PES-GFK; Polyester-Glasfaserverstärkte Kunststoffe), Poly(methylmethacrylat) (PMMA) sowie Polycarbonat (PC) gezeigt. Als besonders problematisch hat sich diesbezüglich PDMS-PC und PDMS-PMMA erwiesen. Bei diesen Werkstoffen handelt es sich um ein Polycarbonat respektive um ein Poly(methylmethacrylat), welches mit einer Polydimethylsiloxan-basierenden Beschichtung versehen worden ist. PDMS-PC und PDMS-PMMA weisen einerseits die Eigenschaft auf, dass sie sehr kratzresistent und andererseits sehr hydrophob sind. Aufgrund dieser Eigenschaften werden diese Werkstoffe immer häufiger im Automobilbau und Schiffsbau eingesetzt. Infolge des hydrophoben Charakters sind jedoch bisher den Anwendungen, wo eine Haftung mit einem reaktiven System, wie beispielsweise einem Klebstoffe, benötigt werden, Grenzen gesetzt.

Polyisocyanat-basierende Primer sind seit langem bestens bekannt.

US 6,153,699 beschreibt einen Primer, der neben einem siliconmodifizierten Acrylat ein Polyisocyanat enthält. Als bevorzugtes Polyisocyanat werden Addukte von Hexamethylendiisocyanat (HDI) und Toluoldiisocyanat (TDI) genannt. Dieser Primer weist eine besonders gute Haftung auf Polyvinylchlorid (PVC) auf. Auf den schwierig zu verklebenden Untergründen wie PDMS-PC ist die Haftvermittlung jedoch ungenügend. Zudem verfügen Polyacrylat- und Polyester-basierende Primer vielfach über eine ungenügende Benetzung und über ungenügende Haftung auf Kunststoff-Untergründen, wie z.B. ABS und PC.

US 5,576,558 beschreibt einen Primer für 40%-gefülltes Polypropylen oder schwer verklebbare Automobillacke. Der Primer enthält neben Isocyanaten ein anorganisches Phosphat. Infolge der verwendeten schnellen aromatischen Isocyanaten ist dieser Primer ungeeignet für lange Offenzeiten, da die verwendeten Isocyanate relativ schnell mit der Luftfeuchtigkeit abreagieren.

EP 1'172'424 A1 beschreibt einen Primer für lange Offenzeiten und Haftung auf Glas und Silicon-Hardcoats. Die genaue Natur dieses Silicon-Hardcoats ist jedoch nicht näher beschrieben. Der Primer enthält neben einem Acrylatharz, einem Epoxyharz und Russ ein Addukt aus Amino- und Dialkoxy-/Trialkoxysilangemisch. Das Silan-Addukt ist in einer sehr grossen Menge von 10 -35 %, bezogen auf das Gewicht des Primers, vorhanden. Eine solch grosse Konzentration ist für einen solchen Primer notwendig, um einen Haftungsaufbau zu gewährleisten. Die hohe Konzentration des Silan-Adduktes führt jedoch dazu, dass ein solcher Silan-basierender Primer nicht geeignet für Polyurethanklebstoffe ist, weil zwar für den Aufbau einer genügend guter Haftung auf Glas grosse Mengen an Alkoxysilangruppen benötigt werden, welche dann aber bei der Hydrolyse niedermolekulare Alkohole wie Ethanol oder Methanol abspalten. Der gebildete primäre Alkohol reagiert wiederum mit Isocyanatgruppen eines Polyurethan-Klebstoffes, wodurch diese nicht mehr zur Verfügung stehen weder für eine Reaktion mit dem Primer noch für die Aushärtung des Klebstoffes und somit an der Grenzfläche Primer/Klebstoff zu mangelhafter Mechanik des Klebverbundes führt.

Mit dem Stand der Technik ist es bisher nicht möglich, einen Primer zu erhalten, welcher gleichzeitig gute Haftung auf problematischen polymereren Untergründen aufweist und eine lange Offenzeit aufweist.

### Aufgabe und Lösung

Es ist die Aufgabe dieser Erfindung, die beschriebenen Nachteile und Probleme der Primer für organische Polymere zu überwinden und einen Primer zur Verfügung zur stellen, welcher gleichzeitig gute Haftung auf problematischen polymereren Untergründen aufweist und eine lange Offenzeit aufweist. Unerwartet wurde gefunden, dass die Nachteile des Standes der Technik durch die erfindungsgemässe Primerzusammensetzung gemäss Anspruch 1 behoben werden konnten. Gleichzeitig ist auch eine gute Haftung bei kurzen Ablüftezeiten beziehungsweise bei kurzen Wartezeiten zwischen Applikation des Primers und des Klebstoffs gewährleistet.

### Zusammenfassung der Erfindung

Die vorliegende Erfindung betrifft eine Primerzusammensetzung enthaltend mindestens ein Polyurethanprepolymer **A** mit Isocyanatendgruppen, mindestens ein aliphatische Polyisocyanat **B**, mindestens ein aromatisches Polyisocyanat **C** sowie mindestens ein Reaktionsprodukt **D**, welches erhältlich aus mindestens einem Epoxysilan und mindestens einem Aminosilan oder aus mindestens einem Epoxysilan und mindestens einem Mercaptosilan ist.

### Ausführliche Beschreibung der Erfindung

Die vorliegende Erfindung betrifft eine Primerzusammensetzung enthaltend mindestens ein Polyurethanprepolymer **A** mit Isocyanatendgruppen, mindestens ein aliphatische Polyisocyanat **B**, mindestens ein aromatisches Polyisocyanat **C** sowie mindestens ein Reaktionsprodukt **D**, welches erhältlich aus mindestens einem Epoxysilan und mindestens einem Aminosilan oder aus mindestens einem Epoxysilan und mindestens einem Mercaptosilan ist.

,Polyol' und ,Polyisocyanat' beschreibt hierbei und im Folgenden, dass die Anzahl der jeweiligen funktionellen Gruppen 2 oder grösser ist.

Das Polyurethanprepolymer **A** wird aus mindestens einem Polyol und mindestens einem Polyisocyanat hergestellt. Die Umsetzung des Polyols mit einem Polyisocyanat kann dadurch erfolgen, dass das Polyol und das Polyisocyanat mit üblichen Verfahren, beispielsweise bei Temperaturen von 50 bis 100°C, gegebenenfalls unter Mitverwendung geeigneter Katalysatoren und/oder bei Raumtemperatur nicht mit Isocyanaten reaktiven Lösungsmitteln, zur Reaktion gebracht werden, wobei das Polyisocyanat im stöchiometrischen Überschuss eingesetzt wird. Als Reaktionsprodukt entsteht das Polyurethanprepolymer **A** mit Isocyanatendgruppen.

Die für die Prepolymerherstellung eingesetzten Polyole sind solche, wie sie in der Polyurethanchemie üblicherweise verwendet werden. Neben Hydroxygruppen-enthaltenden Polyacrylaten, Polyestern, Polycaprolactonen und aus PET(Polyethylenterephthalat) gewonnenen PET-Polyolen, sind von besonderem Interesse als Polyole die Polyoxyalkylenpolyole, insbesondere Polyoxypropylenpolyole, vorzugsweise Polyoxypropylendiole oder -triole. Bevorzugte Polyoxyalkylenpolyole werden aus Ethylenoxid und/oder 1,2-Propylenoxid polymerisiert. Das Molekulargewicht der Polyole beträgt typischerweise vorteilhaft 250 - 20'000 g/mol, insbesondere 500 - 10'000 g/mol. Bevorzugt werden Polyole mit einem Molekulargewicht von 800 - 4'000 g/mol eingesetzt. Unter 'Molekulargewicht' oder 'Molgewicht' versteht man hierbei und im Folgenden stets das Molekulargewichtsmittel M_{w}.

Das für die Herstellung des Polyurethanprepolymers **A** verwendete Polyisocyanat ist ein aromatisches oder ein aliphatisches Polyisocyanat. Unter ,aromatisches Polyisocyanat' wird hierbei ein Polyisocyanat verstanden, bei welchem die Isocyanat- (=NCO-) Gruppe direkt an einem aromatischen Grundkörper, vorteilhaft einem C6-Ring, hängt, während unter einem ,aliphatisches Polyisocyanat' ein solches Polyisocyanat verstanden wird, bei welchem die NCO-Gruppe nicht direkt an einem aromatischen Grundkörper hängt. Es gibt jedoch auch Polyisocyanate, speziell Umsetzungsprodukte von Mischungen aus aliphatischen als auch aromatischen Polyisocyanaten, welche in demselben Molekül sowohl aromatische als auch aliphatische NCO-Gruppen aufweisen. Solche Moleküle werden hierbei sowohl als aromatische als auch aliphatische Polyisocyanate klassiert.

Für die Herstellung des Polyurethanprepolymeren **A** kommen besonders die Polyisocyanate aus der folgenden Liste in Betracht:

2,4- und 2,6-Toluylendiisocyanat (TDI) und beliebige Gemische dieser Isomeren; 4,4'-Diphenylmethandiisocyanat (MDI), die stellungsisomeren Diphenylmethandiisocyanate; Di- und Tetraalkyl-Diphenylmethandiisocyanate; 4,4'-dibenzyldiisocyanat, 1,3- und 1,4-Phenylendiisocyanat; die Isomeren des Naphtylenediisocyanates, Xylylenediisocyanates, Triphenylmethantriisocyanates, und deren Isomerenmischungen; Tris(p-isocyanatophenyl)thiophosphat (erhältlich z.B. als Desmodur RFE von Bayer);

Hexamethylendiisocyanat (HDI), 2,2,4- und 2,4,4-Trimethyl-1,6-hexamethylendiisocyanat, Tetramethoxybutane-1,4-diisocyanat, Butane-1,4-diisocyanat, Dicyclohexylmethandiisocyanat, Cyclohexan-1,3- und 1,4-diisocyanat, 1,12-Dodecamethylendiisocyanat, Diisocyanate von dimeren Fettsäuren; Lysine methylester diisocyanat, 1-lsocyanato-3,3,5-trimethyl-5-isocyanatomethyl-cyclohexan (=lsophorondiisocyanat oder lPDl), hydriertes Diphenylmethandiisocyanat, hydriertes 2,4- und 2,6-Toluylendiisocyanat;

Oligo-, Poly- oder Copolymere dieser Monomere, wie polymeres HDI, polymeres MDI, beispielsweise kommerziell erhältlich als Voranate M-580 (Dow), oder Biurete, Uretdione und lsocyanurate dieser Monomere, insbesondere HDI Biurete, wie beispielsweise kommerziell erhältlich als Desmodur N-100 (Bayer), Luxate HDB 9000 (Lyondell), HDI Trimere, wie beispielsweise kommerziell erhältlich als Desmodur N-3300 (Bayer), Desmodur N-3600 (Bayer), Luxate HT 2000 (Lyondell), HDI Dimere, wie beispielsweise kommerziell erhältlich als Desmodur N-3400 (Bayer), Luxate HD 100 (Lyondell), IPDI Trimer, wie beispielsweise kommerziell erhältlich als Desmodur Z 4470 (Bayer), Vestanat T 1890/100 (Hüls), Luxate IT 1070 (Lyondell), TDI-Trimer, wie beispielsweise kommerziell erhältlich als Desmodur IL (Bayer), TDI Addukte, wie beispielsweise kommerziell erhältlich als Desmodur L (Bayer), TDI-/HDI polymer, wie beispielsweise kommerziell erhältlich als Desmodur HL (Bayer), Polurene lK D (Sapici), Hartben AM 30 (Benasedo), polymeres MDI

Für Primer, welche in Bereichen eingesetzt werden, wo Flammschutz respektive Flammhemmung von Wichtigkeit sind, können halogenierte Polyisocyanate vorteilhaft eingesetzt werden.

Die Primerzusammensetzung umfasst weiterhin mindestens ein aliphatisches Polyisocyanat **B**. Bevorzugt sind aliphatische Polyisocyanate ausgewählt aus der obigen Liste der Polyisocyanate für die Herstellung des Prepolymeren **A**. Besonders bevorzugt sind aliphatisch NCO-gruppentragende lsocyanurate **B1** oder aliphatisch NCO-gruppentragende Biurete **B2**. Unter ,aliphatisch NCO-gruppentragend' wird verstanden, dass die NCO Gruppe nicht direkt an einem aromatischen Grundkörper hängt. Bevorzugt als aliphatisch NCO-gruppentragende lsocyanurate **B1** sind lPDl-lsocyanurate, wie beispielsweise IPDI Trimer, wo formell drei Moleküle IPDI unter Bildung eines lsocyanurates miteinender verbunden werden, so dass formell pro Molekül drei NCO-Gruppen frei bleiben.

Bevorzugt als aliphatisch NCO-gruppentragende Biurete **B2** sind HDI-Biurete, wie beispielsweise HDI-Biurete, bei denen formell drei Moleküle HDI miteinander unter Bildung eines Biurets reagieren, so dass formell pro Molekül drei NCO-Gruppen frei bleiben.

In einer besonders bevorzugten Ausführungsform ist in der Primerzusammensetzung gleichzeitig mindestens ein NCO-gruppentragendes Isocyanurat **B1** und mindestens ein aliphatisch NCO-gruppentragendes Biuret **B2** vorhanden.

Die Primerzusammensetzung umfasst weiterhin mindestens ein aromatisches Polyisocyanat **C**. Bevorzugt sind aromatische Polyisocyanate ausgewählt aus der obigen Liste der Polyisocyanate für die Herstellung des Prepolymeren **A**. Besonders bevorzugt sind aromatisch NCO-gruppentragende lsocyanurate. Unter ,aromatisch NCO-gruppentragend' wird verstanden, dass die NCO Gruppe direkt an einem aromatischen Grundkörper hängt. Insbesondere besonders bevorzugt sind aromatisch NCO-gruppentragende lsocyanurate, welche aus Toluoldiisocyanat und Hexamethylendiisocyanat hergestellt werden, wie beispielsweise das Isocyanurat, welches formell aus einem Molekül HDI und vier Molekülen TDI unter Bildung von zwei Isocyanurat Gruppen und vier verbleibende aromatische NCO-Gruppen, entsteht.

Die Primerzusammensetzung umfasst weiterhin mindestens ein Reaktionsprodukt **D** erhältlich aus mindestens einem Epoxysilan und mindestens einem Aminosilan oder mindestens aus einem Epoxysilan und mindestens einem Mercaptosilan. Unter einem ,Epoxysilan' wird ein Epoxygruppen-tragendes Silan, unter einem ,Aminosilan' wird ein Silan, welches Aminogruppen trägt, und unter einem ,Mercaptosilan' wird ein Silan, welches Mercaptogruppen trägt, verstanden.

Die Herstellung des Reaktionsprodukt **D** kann erfolgen, indem das Epoxysilan mit einem Aminosilan oder mit einem Mercaptosilan unter Ausschluss von Feuchtigkeit zur Reaktion gebracht wird. Bei der Reaktion ist hierbei darauf zu achten, dass für die eingesetzten Mengen der Reaktionspartner das Verhältnis der aktiven-Aminwasserstoffe oder Mercaptogruppen in Bezug auf die Epoxygruppen von grosser Wichtigkeit ist.

Vorteilhaft beim Aminosllan/Epoxysilan-Addukt bewegt sich hierbei das Verhältnis von Anzahl aktiven-Aminwasserstoffe / Anzahl Epoxygruppen = 3:1 - 1:3. Bevorzugt wird ein Verhältnis von 2:1 - 1:1.5. Als besonders vorteilhaft ist das Verhältnis von etwa 2:1 - etwa 1:1.

Vorteilhaft beim Mercaptosilan/Epoxysilan-Addukt bewegt sich hierbei das Verhältnis von Anzahl Mercaptogruppen / Anzahl Epoxygruppen = 1.5:1 - 1:1.5. Bevorzugt wird ein Verhältnis von 1.2:1 - 1:1.2. Als besonders vorteilhaft ist das Verhältnis von etwa 1:1, so dass die Reaktion in etwa stöchiometrisch abläuft.

Geeignet als Epoxysilan für die Herstellung des Reaktionsproduktes **D** sind vor allem Epoxydimethoxymethylsilane, Epoxytrimethoxysilane oder Epoxytriethoxysilane, insbesondere 3-Glycidyloxypropylmethyldimethoxysilan, 2-(3,4-Epoxycyclohexyl)ethylmethyldimethoxysilan. Bevorzugt sind Epoxytrimethoxysilane und Epoxytriethoxysilane, insbesondere 3-Glycidyloxypropyltrimethoxysilan, 3-Glycidyloxypropyltriethoxysilan oder 2-(3,4-epoxycyclohexyl)-ethyltrimethoxysilan. Besonders bevorzugt ist 3-Glycidyloxypropyltrimethoxysilan.

Als Mercaptosilan geeignet für die Herstellung des Reaktionsproduktes **D** sind 2-Mercaptoethyltriethoxysilan, 3-Mercaptoethylmethyldimethoxysilan, 3-Mercaptopropyldimethylmethoxysilan, 3-Mercaptopropylethyldiethoxysilan, 3-Mercaptopropylethyldimethoxysilan, 3-Mercaptopropylmethyldiethoxysilan, 3-Mercaptopropylmethyldimethoxysilan, 3-Mercaptopropyltriethoxysilan, 3-Mercaptopropyltrimethoxysilan, bevorzugt 3-Mercaptopropyltriethoxysilan, 3-Mercaptopropyltrimethoxysilan, insbesondere 3-Mercaptopropyltrimethoxysilan.

Als Aminosilane geeignet für die Herstellung des Reaktionsproduktes **D** sind besipielsweise Aminodiethoxymethylsilan, Aminodimethoxymethylsilan, Amino- trimethoxysilan oder ein Amino- triethoxysilan. Geeignete Beispiele für Aminosilane sind 3-Aminoisobutyltrimethoxysilan, 3-Aminopropyltrimethoxysilan, Bis(trimethoxysilylpropyl)amin, N-(2-Aminoethyl)-3-amino-2-methylpropyltrimethoxysilan, N-(2-Aminoethyl)-3-aminopropyltrimethoxysilan, N-(2-Aminoethyl)aminomethyl-trimethoxysilan, N-(n-butyl)-3-aminopropyltrimethoxysilan, N-Methyl-3-aminopropytrimethoxysilan, N-phenyl-3-aminopropyltrimethoxysilan, 3-Aminopropyltriethoxysilan, Aminomethyltriethoxysilan, N-Aminoethyl-3-aminopropyltriethoxysilan, 3-Aminopropylmethyldiethoxysilan, 3-Aminopropylmethyldimethoxysilan, 3-Aminomethyldiethoxysilan, N-(2-aminoethyl)-3-aminopropylmethyldimethoxysilan, N-aminoethyl-3-aminopropylmethyldimethoxysilan oder N-aminoethyl-3-aminopropylmethyldiethoxysilan.

Insbesonders geeignet sind Trimethoxysilane mit primären Aminogruppen oder Triethoxysilane mit primären Aminogruppen. Besonders bevorzugt sind 3-(2-Aminoethylamino)-propyltrimethoxysilan oder 3-Aminopropyltrimethoxysilan.

Besonders bevorzugt wird das Reaktionsprodukt **D** aus 3-Glycidyloxy-propyl-trimethoxysilan und 3-Aminopropyltrimethoxysilan hergestellt.

Die Menge des Reaktionsproduktes **D** ist hierbei so zu wählen, dass der Anteil im Bereich von 0.5 - 15 Gewichts-%, insbesondere 2 - 10 Gewichts-%, bezogen auf die Gewichtssumme **A+B+C+D**, beträgt. Bei geringerem Anteil ist die Haftung ungenügend, während bei grösserem Anteil die Primerzusammensetzung nicht genügend lagerstabil ist.

Gemäss einer Ausführungsform enthält die Primerzusammensetzung zusätzlich mindestens ein bei Raumtemperatur nicht mit NCO reaktives Lösungsmittel. Es handelt sich hierbei vor allem um Ketone, Ester, Ether, aliphatische Kohlenwasserstoffe, aromatische Kohlenwasserstoffe, halogenierte Kohlenwasserstoffe sowie N-alkylierte Lactame.

Als Ketone eignen sich vor allem Acetonylaceton, Mesityloxid, cyclische Ketone und Dialkylketone. Cyclische Ketone mit Ringgrössen von 5 bis 9 sind als cyclische Ketone besonders geeignet, insbesondere Methylcyclohexanon und Cyclohexanon.

Bevorzugte Dialkylketone sind Ketone mit C1- bis C6-Alkylsubstituenten, wobei die Alkylsubstituenten gleich oder verschieden sein können. Bevorzugt sind Aceton, Diisobutylketon, Diethylketon, Dipropylketon, Methylamylketon, Methylbutylketon, Methylpropylketon, Methylethylketon (MEK), n-Hexylmethylketon.

Als Ester sind bevorzugt Alkylcarbonsäureester mit C1- bis C6-Alkylsubstituenten, bevorzugt Acetate, insbesondere Ethylacetat, Propylacetat, Isopropylacetat, Butylacetat, lsobutylacetat Hexylacetat oder Amylacetat; Butyrate, insbesondere Isobutylisobutyrat; Propionate, insbesondere Ethylpropionat; Formiate, Malonate, insbesondere Dimethylmalonat oder Diethylmalonat. Diethylmalonat und Dimethylmalonat weisen zudem eine stabilisierende Wirkung auf Zinnorganische Katalysatoren auf.

Als Ether sind bevorzugt Ketonether, Esterether und Dialkylether mit C1- bis C6- Alkylsubstituenten, wobei die Alkylsubstituenten gleich oder verschieden sein können, insbesondere Diisopropylether, Diethylether, Dibutylether, Diethylenglycoldiethylether sowie Ethylenglycoldiethylether.

Als Ketonether sind bevorzugt Acetalethylether, Acetonylmethanolether und Methylethoxyethylether.

Als Esterether sind bevorzugt Diethylenglycolbutyletheracetat, Ethylenglycolbutyletheracetat, Diethylenglycolethyletheracetat, Ethylenglycolethyletheracetat, 3-Methoxybutylacetat, Diethylenglycolmethyletheracetat, Ethylenglycolmethyletheracetat.

Als aliphatische oder aromatische Kohlenwasserstoffe sind beispielsweise Toluol, Xylol, Heptan, Octan sowie unterschiedliche Erdölfraktionen wie Naphta, White Spirit, Petrolether, Benzin etc. geeignet.

Als halogenierte Kohlenwasserstoffe sind beispielsweise Methylenchlorid, Ethylenchlorid, Trichloroethylen, Perchloroethylen, Chloroform, Ethylentrichlorid, Brombenzol, Chlorbenzol sowie Dichlorbenzol geeignet.

Als N-alkylierte Lactame ist bevorzugt N-Methylpyrrolidon (NMP).

Besonders bevorzugt ist das Lösungsmittel ausgewählt aus der Gruppe Methylethylketon, Aceton, Ethylacetat, Butylacetat, Hexylacetat und Diethylmalonat.

Weiterhin kann die Primerzusammensetzung zusätzlich mindestens einen Katalysator für die Reaktion der Isocyanatgruppen enthalten. Dieser Katalysator ist vorzugsweise eine zinnorganischer Katalysator, insbesondere ausgewählt aus der Gruppe Dibutylzinndilaurat, Dibutylzinndichlorid, Zinn-Thioesterkomplexe, Mono-n-butylzinntrichloride, Di-n-butylzinnoxid, Di-n-butylzinndiacetat, Dibutylzinncarboxylat. Beispiele für geeignete nichtzinnorganische Katalysatoren sind Bi(ll)-octoat, Bi(ll)-neodecanoat, Zn(ll)-2-ethylhexanoat.

Zusätzlich zu der Primerzusammensetzung können weitere Haftvermittler, insbesondere Silane beigegeben werden. Vorteilhaft handelt es sich um Silane ausgewählt aus der Gruppe 3-Glycidyloxypropyltrimethoxysilan, 3-Glycidyloxypropyltriethoxysilan, 2-(3,4-epoxycyclohexyl)-ethyltrimethoxysilan, 3-Ureidopropyltriethoxysilan, 3-(4,5-Dihydroimidazolyl)propyl-triethoxysilan, 3-Methacryloxypropyltrimethoxysilan (monomerisch oder polymerisiert), Vinyltrimethoxysilan (monomerisch oder polymerisiert), Vinyltriethoxysilan (monomerisch oder polymerisiert), Vinyltris(2-methoxyethoxy)silan (monomerisch oder polymerisiert), 1,3,5-tris[3-(Trimethoxysilyl)propyl]-1,3,5-triazine-2,4,6(1H,3H,5H)-trion, Methyltrimethoxysilan, Methyltriethoxysilan, Trimethoxypropylsilan, Triethoxypropylsilan, 2-Methylpropyltrimethoxysilan, Triethoxyisobutylsilan, Octyltrimethoxysilan, Octyltriethoxysilan, Hexadecyltrimethoxysilan, Cyclohexyldimethoxymethylsilan, 3-lsocyanatopropyltrimethoxy-silan, 3-lsocyanatopropyltriethoxysilan, 3-Methacryloxypropyltriethoxysilan (monomerisch oder polymerisiert). Besonders bevorzugt sind 3-Glycidyloxypropyltrimethoxysilan und 3-Glycidyloxypropyltriethoxysilan.

Weiterhin können in der Primerchemie übliche Füllstoffe und Additive eingesetzt werden. Beispiele nicht limitierender Art hierfür sind Kieselsäuren, Talk, Russ, Stabilisatoren, Bentone, chemische und physikalische Trocknungsmittel.

Die beschriebene Zusammensetzung wird hergestellt und aufbewahrt unter Ausschluss von Feuchtigkeit.

Die Primerzusammensetzung eignet sich als Primer für diverse Untergründe. Besonders geeignet ist er für Glas, Glaskeramiken, Metalle und Legierungen sowie diverse Kunststoffe. Als bevorzugte Kunststoffe seien insbesondere ABS, PVC, PES-GFK, EP-GFK, PMMA, PC, PDMS-PC, PDMS-PMMA sowie Lacke genannt. Die erfindungsgemässe Primerzusammensetzung eignet sich speziell gut für PDMS-PC oder PDMS-PMMA als Untergrund. Die diversen Untergründe werden vor der Applikation vorteilhafterweise vorbehandelt. Solche Vorbehandlungsmethoden beinhalten physikalische und/oder chemischen Vorbehandlung, beispielsweise Schleifen, Sandstrahlen, Bürsten oder dergleichen, oder durch Behandeln mit Reinigern, Lösungsmitteln, Haftvermittlern, Haftvermittlerlösungen.

Der Primer wird mittels Pinsel, Filz, Tuch oder Schwamm auf ein Substrat aufgetragen. Dieser Auftrag kann manuell oder automatisch, insbesondere mittels Roboter, erfolgen. Weiterhin können auch mehrere Schichten der Primerzusammensetzung appliziert werden.

Die Primerzusammensetzung wird vorteilhaft als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden vewendet. Bevorzugte Einsatzgebiete dieser Primer sind Gebiete, wo auch industriell gefertigte Komponenten verklebt werden. Es handelt sich insbesondere um Anwendungen, wo der Primer im Werk eines Zulieferanten appliziert wird.

### Beispiele

Die folgenden Beispiele sind typische Beispiele zur Illustration der Erfindung.

### Herstellung des Prepolymeren PREP1

Es wurde eine 5-Hals-Glasapparatur verwendet, welche mit einem motor-betriebenen Rührer, einem N₂-Anschluss, einem Temperaturfühler, einem Rückflusskühler und einem Tropftricher ausgestattet war. Alle im folgenden beschriebenen Reaktionen wurden unter Stickstoff durchgeführt.

531.6g Desmodur HL wurde in 212.1g Methylethylketon gelöst. Nach leichtem Erwärmen wurde 44.2 g Voranol P-1010 (Polypropylenglycol, mittleres Molekulargewicht 1000 g/mol, erhältlich von Dow), in 212.1g MEK gelöst, langsam über den Tropftrichter zur Isocyanat-Lösung zugetropft. Nach Beendigung des Zutropfens wurde noch weitere 5 Stunden gerührt. Das Reaktionsende wurde durch Messen der NCO-Konzentration ermittelt.

### Herstellung des Primers

Die Primer *PR1* bis *PR8* wurden gemäss der Zusammensetzung in Tabelle 1 hergestellt.

Für die Herstellung wurde wie folgt vorgegangen: das Prepolymer vorgelegt, anschliessend gegebenenfalls das aliphatische Isocyanurat zugegeben und gewartet bis es gelöst war. Anschliessend wurde gegebenenfalls das aliphatische Biuret sowie gegebenenfalls das aromatische lscocyanurat hinzugegeben. Über eine Schlauchquetschpumpe wurde anschliessend das Addukt *AD1* von 3-Aminopropyltrimethoxysilan und 3-Glycidyloxypropyltrimethoxysilan (molares Verhältnis = 1 : 1.32) langsam zur Lösung hinzugetropft. Schliesslich wurde die Lösung noch mit MEK, wie in Tabelle 1 angegeben, verdünnt.

**Tabelle 1.**

| Beispiele Zusammensetzungen | | | | | | | | |
|---|---|---|---|---|---|---|---|---|
| Beispiel | *PR1* | *PR2* | *PR3* | *PR4* | *PR5* | *PR6* | *PR7* | *PR8* |
| Prepolymer *PREP1* [g] | 800 | 800 | 800 | 800 | 800 | 800 | 800 | 800 |
| Desmodur N-100 [g] | 0 | 420 | 0 | 130 | 0 | 420 | 0 | 130 |
| Vestanat T1890/100 [g] | 0 | 0 | 0 | 100 | 0 | 0 | 0 | 100 |
| Desmodur HL [g] | 0 | 0 | 420 | 190 | 0 | 0 | 420 | 190 |
| Epoxysilan-/Aminosilan-Addukt *AD1* [g] | 0 | 0 | 0 | 0 | 60 | 30 | 30 | 30 |
| MEK[g] | 0 | 380 | 380 | 380 | 0 | 380 | 380 | 380 |

### Untergrundvorbereitung und Applikation des Primers

| Untergrund | Bezugsquelle |
|---|---|
| ABS | Firma Rocholl, Schönbrunn, Deutschland |
| EP-GFK | Firma Rocholl, Schönbrunn, Deutschland |
| PC | Firma Rocholl, Schönbrunn, Deutschland |
| PDMS-PC | Firma Angst+Pfister, Zürich, Schweiz |

Die Untergründe wurden mit Isopropanol gereinigt. Bei PDMS-PC wurde vorgängig die Oberfläche mit Sika® Activator (erhältlich von Sika Schweiz AG) mittels Tuch aktiviert. Nach einer Wartezeit von 10 Minuten wurde der Primer auftragen.

### Applikation des Klebstoffs und Testmethoden

Nach einer in Tabelle 2 spezifizierten Wartezeit t nach der Applikation des Primers wurde auf den Primer eine Klebstoffraupe eines Polyurethanklebstoff appliziert. Es handelte sich hierbei um SikaTack®-Ultrafast (erhältlich von Sika Schweiz AG) sowie Sikaflex®-250 DM-1 (erhältlich von Sika Schweiz AG). Der Klebstoff wurde nach einer Aushärtezeit von 7 Tagen Klimaraumlagerung (23°C, 50% rel. Luftfeuchtigkeit) getestet.

Die Haftung des Klebstoffes wurde mittels ,Raupentest' getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = adhäsiver Bruch

Durch den Zusatz "P" wird angegeben, dass der Primer sich vom Untergrund ablöst, und deshalb die Haftung des Primers auf dem Untergrund eine Schwachstelle darstellt. Testresultate mit Kohäsionsbrüchen von weniger als 75% gelten als ungenügend.

### Resultate

Tabelle 2 zeigt die Resultate der Haftprüfungen der Beispiele *PR1* bis *PR8.* Einerseits sind in dieser Tabelle die Haftungsresultate auf beispielhaft problematischen Untergründen und sowohl bei kurzen und insbesondere langen Wartezeiten zwischen Applikation des Primers und der Klebstoffe dargestellt.

**Tabelle 2.**

| Haftungsresultate auf problematischen Polymeruntergründen bei unterschiedlichen Wartezeiten ***t*** zwischen Applikation des Primers und des Klebstoffs. | | | | | | | | |
|---|---|---|---|---|---|---|---|---|
| **Kurze Wartezeiten** | | | | | | | | |
| Beispiel | *PR1* | *PR2* | *PR3* | *PR4* | *PR5* | *PR6* | *PR7* | *PR8* |
| EP-GFK (***t* = 10 min**) | | | | | | | | |
| SikaTack®-Ultrafast | 1 | 1 | 1 | 1 | 1 | 1 | 1 | 1 |
| Sikaflex®-250 DM-1 | 2 | 1 | 1 | 1 | 2 | 1 | 5 | 1 |
| | | | | | | | | |
| PC (***t* = 10 min**) | | | | | | | | |
| SikaTack®-Ultrafast | 1 | 5P | 1 | 1 | 1 | 5P | 1 | 1 |
| Sikaflex®-250 DM-1 | 2 | 4P | 4 | 1 | 1 | 5P | 4 | 1 |
| | | | | | | | | |
| PDMS-PC (***t* = 10 min**) | | | | | | | | |
| SikaTack®-Ultrafast | 3 | 5P | 4P | 1 | 3 | 5P | 3 | 1 |
| Sikaflex®-250 DM-1 | 3 | 5P | 3P | 1 | 3 | 2P | 4 | 1 |
| | | | | | | | | |

| **Lange Wartezeiten** | | | | | | | | |
|---|---|---|---|---|---|---|---|---|
| Beispiel | *PR1* | *PR2* | *PR3* | *PR4* | *PR5* | *PR6* | *PR7* | *PR8* |
| EP-GFK **(*t* = 17 Tage)** | | | | | | | | |
| SikaTack®-Ultrafast | 5P | 5P | 5P | 2 | 3P | 2 | 5P | 1 |
| Sikaflex®-250 DM-1 | 5P | 5P | 5P | 2 | 2P | 2 | 5P | 1 |
| | | | | | | | | |

| PC **(*t* = 12 Tage)** | | | | | | | | |
|---|---|---|---|---|---|---|---|---|
| SikaTack®-Ultrafast | 5 | 5 | 4 | 4 | 5 | 5 | 4 | 2 |
| Sikaflex®-250 DM-1 | 5 | 5 | 5 | 4 | 5 | 5 | 4 | 2 |
| | | | | | | | | |

| PDMS-PC **(*t* = 12 Tage)** | | | | | | | | |
|---|---|---|---|---|---|---|---|---|
| SikaTack®-Ultrafast | 5 | 5 | 5 | 5 | 5 | 5 | 5 | 2 |
| Sikaflex®-250 DM-1 | 5 | 5 | 5 | 5 | 5 | 5 | 5 | 2 |

Es ist aus Tabelle 2 klar ersichtlich, dass das Beispiel *PR8* als eine erfindungsgemässe Primerzusammensetzung auf allen problematischen Untergründen insbesondere PDMS-PC und PC, im Vergleich zu den Vergleichsbespielen stets ausgezeichnete Haftung aufweist. Insbesondere ist bei diesem Vergleich auf den langen Einfluss der langen Offenzeiten der erfindungsgemässen Zusammensetzungen zu achten. Es zeigt sich zwar, dass bei gewissen Vergleichsbeispielen wie *PR4* und *PR5* zwar bei kurzen Wartezeiten gute Haftung aufweisen, aber bei längeren Wartezeiten ist dies nicht mehr der Fall. Gute Haftung bei langen Wartezeiten sind lediglich mit erfindungsgemässen Zusammensetzungen zu erreichen, wie das Beispiel *PR8* veranschaulicht.

## Patentansprüche

1. Primerzusammensetzung umfassend
- mindestens ein Polyurethanprepolymer **A** mit Isocyanatendgruppen;
- mindestens ein aliphatische Polyisocyanat **B**
- mindestens ein aromatisches Polyisocyanat **C**
- mindestens ein Reaktionsprodukt **D** erhältlich aus mindestens einem Epoxysilan und mindestens einem Aminosilan oder aus mindestens einem Epoxysilan und mindestens einem Mercaptosilan.

2. Primerzusammensetzung gemäss Anspruch 1, **dadurch gekennzeichnet, dass** das Polyurethanprepolymer **A** hergestellt wird aus mindestens einem Polyol und mindestens einem Polyisocyanat.

3. Primerzusammensetzung gemäss Anspruch 2, **dadurch gekennzeichnet**, das Polyol ein Polyoxyalkylenpolyol ist.

4. Primerzusammensetzung gemäss Anspruch 3, **dadurch gekennzeichnet**, das Polyol ein Polyoxypropylenpolyol, insbesondere ein Polyoxypropylendiol oder -triol ist.

5. Primerzusammensetzung gemäss einem der Ansprüche 2 bis 4, **dadurch gekennzeichnet, dass** das Polyol ein Molekulargewicht von 250 - 20'000 g/mol, insbesondere 500 - 10'000 g/mol, vorzugsweise 800 - 4'000 g/mol aufweist.

6. Primerzusammensetzung gemäss einem der vorhergehenden Ansprüche, **dadurch gekennzeichnet, dass** das aliphatische Polyisocyanat **B** ein aliphatisch NCO-gruppentragendes Isocyanurat **B1** und/oder ein aliphatisch NCO-gruppentragendes Biuret **B2** ist.

7. Primerzusammensetzung gemäss Anspruch 6, **dadurch gekennzeichnet, dass** das aliphatische NCO-gruppentragendes Isocyanurat **B1** ein IPDIlsocyanurat ist.

8. Primerzusammensetzung gemäss Anspruch 6 oder 7, **dadurch gekennzeichnet, dass** das aliphatisch NCO-gruppentragendes Biuret **B2** ein HDI- Biuret ist.

9. Primerzusammensetzung gemäss einem der vorhergehenden Ansprüche, **dadurch gekennzeichnet, dass** das aromatische Polyisocyanat **C** ein aromatisch NCO-gruppentragendes Isocyanurat ist.

10. Primerzusammensetzung gemäss Anspruch 9, **dadurch gekennzeichnet, dass** das aromatische Polyisocyanat **C** ein aromatisch NCO-gruppentragendes Isocyanurat, welches aus Toluoldiisocyanat und Hexamethylendiisocyanat hergestellt werden kann.

11. Primerzusammensetzung gemäss einem der vorhergehenden Ansprüche, **dadurch gekennzeichnet, dass** für das für die Herstellung des Reaktionsproduktes **D** verwendete Epoxysilan ein Epoxydimethoxymethylsilan, ein Epoxytrimethoxysilan oder ein Epoxytriethoxysilan, vorzugsweise 2-(3,4-epoxycyclohexyl)-ethyltrimethoxysilan 3-Glycidyloxy-propyl-trimethoxysilan oder 3-Glycidyloxy-propyl-triethoxysilan, insbesondere 3-Glycidyloxy-propyl-trimethoxysilan ist.

12. Primerzusammensetzung gemäss einem der vorhergehenden Ansprüche, **dadurch gekennzeichnet, dass** für das für die Herstellung des Reaktionsproduktes **D** verwendete Aminosilan ein Aminodiethoxymethylsilan, Aminodimethoxymethylsilan, Amino- trimethoxysilan oder ein Amino-triethoxysilan, insbesondere ein Trimethoxysilan mit primären Aminogruppen oder ein insbesondere ein Triethoxysilan mit primären Aminogruppen, vorzugsweise 3-(2-Aminoethylamino)-propyltrimethoxysilan oder 3-Aminopropyltrimethoxysilan ist.

13. Primerzusammensetzung gemäss einem der vorhergehenden Ansprüche, **dadurch gekennzeichnet, dass** das Reaktionsproduktes **D** aus 3-Glycidyloxy-propyl-trimethoxysilan und 3-Aminopropyltrimethoxysilan hergestellt wird.

14. Primerzusammensetzung gemäss einem der vorhergehenden Ansprüche, **dadurch gekennzeichnet, dass** für die Herstellung des Reaktionsproduktes **D** Epoxysilan und Aminosilan im Verhältnis von Anzahl aktiven-Aminwasserstoffe / Anzahl Epoxygruppen = 3:1 - 1:3, insbesondere 2:1 - 1:1.5, bevorzugt 2:1 - etwa 1:1, eingesetzt werden.

15. Primerzusammensetzung gemäss einem der Ansprüche 1-11 vorhergehenden Ansprüche, **dadurch gekennzeichnet, dass** für die Herstellung des Reaktionsproduktes **D** Epoxysilan und Mercaptosilan im Verhältnis von Anzahl Mercaptogruppen / Anzahl Epoxygruppen = 1.5:1-1:1.5, insbesondere 1.2:1 - 1:1.2, bevorzugt etwa 1:1, eingesetzt werden.

16. Primerzusammensetzung gemäss einem der vorhergehenden Ansprüche, **dadurch gekennzeichnet, dass** zusätzlich mindestens ein bei Raumtemperatur nicht mit Isocyanaten reaktives Lösungsmittel vorhanden ist.

17. Primerzusammensetzung gemäss Anspruch 16, **dadurch gekennzeichnet, dass** das Lösungsmittel eine Dialkyl-Keton oder ein Alkylcarbonsäureester mit C1- bis C6- Alkylsubstituenten.

18. Primerzusammensetzung gemäss Anspruch 17, **dadurch gekennzeichnet, dass** das Lösungsmittel ausgewählt ist aus der Gruppe Methylethylketon, Aceton, Ethylacetat, Butylacetat, Hexylacetat und Diethylmalonat ist.

19. Primerzusammensetzung gemäss einem der vorhergehenden Ansprüche, **dadurch gekennzeichnet, dass** zusätzlich mindestens ein Katalysator, vorzugsweise ein zinnorganischer Katalysator, insbesondere ausgewählt aus der Gruppe Dibutylzinndilaurat, Dibutylzinndichlorid, Zinn-Thioesterkomplexe, Mono-n-butylzinntrichloride, Di-n-butylzinnoxid, Di-n-butylzinndiacetat, Dibutylzinncarboxylat, vorhanden ist.

20. Primerzusammensetzung gemäss einem der vorhergehenden Ansprüche, **dadurch gekennzeichnet, dass** zusätzlich mindestens ein Silan ausgewählt aus der Gruppe 3-Glycidyloxypropyltrimethoxysilan, 3-Glycidyloxypropyltriethoxysilan, 2-(3,4-epoxycyclohexyl)-ethyltrimethoxysilan, 3-Ureidopropyltriethoxysilan, 3-(4,5-Dihydroimidazolyl)propyl-triethoxysilan, 3-Methacryloxypropyltrimethoxysilan (monomerisch oder polymerisiert), Vinyltrimethoxysilan (monomerisch oder polymerisiert), Vinyltriethoxysilan (monomerisch oder polymerisiert), Vinyltris(2-methoxyethoxy)silan (monomerisch oder polymerisiert), 1,3,5-tris[3-(Trimethoxysilyl)propyl]-1,3,5-triazine-2,4,6(1H,3H,5H)-trion, Methyltrimethoxysilan, Methyltriethoxysilan, Trimethoxypropylsilan, Triethoxypropylsilan, 2-Methylpropyltrimethoxysilan, Triethoxyisobutylsilan, Octyltrimethoxysilan, Octyltriethoxysilan, Hexadecyltrimethoxysilan, Cyclohexyldimethoxymethylsilan, 3-lsocyanatopropyltrimethoxy-silan, 3-lsocyanatopropyltriethoxysilan, 3-Methacryloxypropyltriethoxysilan (monomerisch oder polymerisiert), insbesondere 3-Glycidyloxypropyltrimethoxysilan und 3-Glycidyloxypropyltriethoxysilan, vorhanden ist.

21. Primerzusammensetzung gemäss einem der vorhergehenden Ansprüche, **dadurch gekennzeichnet, dass** mindestens ein Füllstoff, insbesondere Russ, vorhanden ist.

22. Verwendung der Primerzusammensetzung gemäss einem der Ansprüche 1 bis 21 als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden.

23. Verfahren **dadurch gekennzeichnet, dass** eine Primerzusammensetzung gemäss einem der Ansprüche 1 bis 21 mittels Pinsel, Filz, Tuch oder Schwamm auf ein Substrat manuell oder automatisch oder mittels Roboter aufgetragen wird.

24. Verfahren gemäss Anspruch 23, **dadurch gekennzeichnet, dass** das Substrat Glas, Glaskeramik oder ein Kunststoff, insbesondere PDMS-PC oder PDMS-PMMA, ist.
